(19) Europäisches Patentamt

European Patent Office

Office européen des brevets

(11) **EP 0 894 266 B1**

(12) **EUROPÄISCHE PATENTSCHRIFT**

(45) Veröffentlichungstag und Bekanntmachung des Hinweises auf die Patenterteilung:
**27.11.2002 Patentblatt 2002/48**

(21) Anmeldenummer: **97915245.1**

(22) Anmeldetag: **14.04.1997**

(51) Int Cl.$^7$: **G01N 29/10**

(86) Internationale Anmeldenummer:
**PCT/CH97/00145**

(87) Internationale Veröffentlichungsnummer:
**WO 97/040373 (30.10.1997 Gazette 1997/46)**

(54) **CHARAKTERISIERUNG VON OBJEKTEN MITTELS ULTRASCHALL**

CHARACTERISATION OF OBJECTS BY MEANS OF ULTRASONIC WAVES

CARACTERISATION D'OBJETS AU MOYEN D'ULTRASONS

(84) Benannte Vertragsstaaten:
**AT CH DE ES FR GB IT LI NL SE**

(30) Priorität: **18.04.1996 CH 98496**

(43) Veröffentlichungstag der Anmeldung:
**03.02.1999 Patentblatt 1999/05**

(73) Patentinhaber: **Ramseier, Hans-Ulrich**
**3110 Münsingen (CH)**

(72) Erfinder:
• **KREIER, Peter**
**CH-8360 Eschlikon (CH)**

• **KÄLIN, August**
**CH-8906 Bonnstetten (CH)**

(74) Vertreter: **Frei, Alexandra Sarah**
**Frei Patentanwaltsbüro**
**Postfach 768**
**8029 Zürich (CH)**

(56) Entgegenhaltungen:
**EP-A- 0 574 964         DE-C- 4 414 030**
**US-A- 5 247 937         US-A- 5 369 997**

**Beschreibung**

Die Erfindung betrifft ein Verfahren und ein Messgerät zur Charakterisierung von Objekten mittels Ultraschall gemäss den Oberbegriffen der unabhängigen Patentansprüche. Es können insbesondere Dicken von Wänden, von Schichten auf Substraten und in Schichtverbunden, aber auch Höhen von Stufen auf Oberflächen und Oberflächenprofile vermessen werden.

Wenn eine Ultraschallwelle auf eine Grenzfläche zweier Medien mit unterschiedlichen Schallimpedanzen fällt, so wird sie im allgemeinen teilweise reflektiert. Dieses Phänomen wird unter anderem für Dickenmessungen ausgenützt. Man lässt einen Ultraschallimpuls auf das zu vermessende Objekt, beispielsweise eine von einem Substrat getragene Schicht, einfallen, und detektiert als Messigal die Ultraschallimpulse (Echoimpulse), welche an der Vorder- und der Rückseite des Objektes reflektiert worden sind. Aus der Laufzeitdifferenz $\Delta t$ zwischen den beiden Echoimpulsen lässt sich durch eine geeignete Eichung, z. B. bei bekannter Schallgeschwindigkeit c, die Dicke d des Objektes berechnen:

$$d = c\Delta t/2 .$$

Umgekehrt kann bei bekannter Objektdicke d und gemessener Laufzeitdifferenz $\Delta t$ die Schallgeschwindigkeit c berechnet werden.

Ein derartiges Ultraschall-Messignal kann als Faltung einer messobjektabhängigen Reflexionssequenz mit einer messsystemabhängigen Systemantwort aufgefasst werden. Dementsprechend sind die detektierten Messignale keine idealen, scharfen Spitzen (Deltafunktionen), sondern, bedingt durch die begrenzte Bandbreite des Prüfsystems, zeitlich ausgedehnte Hochfrequenzimpulse. Daraus resultieren für die oben beschriebene Dickenmessung unter anderem folgende Schwierigkeiten. Bei hohen Genauigkeitsansprüchen muss die Laufzeitdifferenz $\Delta t$ teilweise mit einer Genauigkeit unterhalb der zeitlichen Ausdehnung eines Ultraschallimpulses ermittelt werden, beispielsweise mit Hilfe einer Kurvenanpassfunktion oder mittels einer charakteristischen Stelle (Schwellenwert, Nullduchgang, Flanke) der Ultraschallimpulse. Bei kleinen Dicken wiederum, d. h. bei kleinen Laufzeitdifferenzen, überlappen die beiden Echos, so dass ihre Auflösung Mühe bereitet. Die hier verwendeteten relativen Begriffe "dünn", "kleine" dicken der zu messenden Schicht oder "hohe" Genauigkeit sind dabei immer in Bezug auf die werkstoff- und verfahrensabhängig verwendbaren Hochfrequenz-Impulslängen zu verstehen (Träger- bzw. Mittenfrequenz). Bedingt durch immer dünner applizierte Schichten und/oder durch material- und ausbreitungsmediumsspezifisch vorhandene und zu höheren Frequenzen zunehmende Schallschwächung manifestieren sich diese Schwierigkeiten zunehmends in technologisch interessanten Dickenmessproblemen.

Die Patentschrift DE-44 14 030 C1 beschreibt z. B. ein Verfahren zur Ermittlung einer Schichtdicke für den Fall von überlappenden Echoimpulsen. Dabei wird die Anstiegzeit der detektierten umhüllenden Kurve als Mass für die Schichtdicke verwendet. Dazu muss das Messgerät vorgängig mit Hilfe von Messungen an Schichten bekannter Dicken kalibriert werden, indem eine Korrelation von Anstiegzeit und Schichtdicke gespeichert wird. Die Notwendigkeit einer solch aufwendigen Kalibrierung stellt einen ersten Nachteil dieses Verfahrens dar. Ein weiterer Nachteil ist, dass eine Schicht nur von der meistens nicht zugänglichen Substratseite her vermessen werden kann. Der Anwendungsbereich dieses Verfahrens ist damit äusserst beschränkt. Das Verfahren funktioniert zudem nur für stark überlappende Echoimpulse ähnlich grosser Amplituden, was eine weitere ernsthafte Einschränkung darstellt.

Die Offenlegungsschrift DE-44 34 688 A1 offenbart ein Ultraschall-Dickenmessgerät mit digitaler Datenerfassung und einer Auswerteinheit, welche die Echoimpulse einer Entfaltungsanalyse unterzieht. Die Entfaltung geschieht mittels einer Division im Frequenzbereich (Wienerfilterung). Für den Übergang vom Zeit- in den Frequenzbereich bzw. zurück wird die schnelle Fourier-Transformation (FFT) bzw. die inverse FFT verwendet. Entfaltungen im Frequenzraum haben den Nachteil, dass sie sehr empfindlich auf im Spektrum des Messignals enthaltene unbekannte Rauschanteile sind.

Beide oben zitierten Schriften beschreiben Ultraschall-Dickenmessgeräte, welche nur in Kontakt mit dem Messobjekt bzw. mit Hilfe eines speziellen Koppelmediums, nicht aber berührungslos arbeiten. Eine berührungslose Dickenmessung wäre jedoch für verschiedene Anwendungen erwünscht: beispielsweise um keine Spuren auf den Messobjekten zu hinterlassen, um die Messobjekte nicht zu beschädigen oder um sie nicht durch ein Koppelmedium zu verschmutzen bzw. zu kontaminieren. Ein Beispiel, wo nur eine berührungslose Messmethode in Frage kommt, ist die Messung der Dicke einer frisch aufgetragenen Pulver-, Lack- oder Farbschicht vor dem Einbrennen, Trocknen oder Aushärten.

Es ist Aufgabe der vorliegenden Erfindung, ein Verfahren zur Charakterisierung von Messobjekten mittels Ultraschall anzugeben, insbesondere zur Dikkenmessung, Schallgeschwindigkeitsmessung oder zur Vermessung eines Oberflächenprofils. Das Verfahren soll wahlweise für berührungslose Messungen oder für Kontaktmessungen geeignet sein. Es soll für Objekte mit Dicken oder Stufen unterhalb, gleich oder oberhalb der verwendeten Schallwellenlänge anwendbar sein. Ein Messobjekt kann beispielsweise ein homogener Körper, ein selbsttragendes Schichtsystem oder eine oder mehrere Schichten auf einem Substrat sein; im letzteren Fall soll das Messverfahren wahlweise von der Schicht- oder der Substratseite her angewendet werden können. Weiter ist es Aufgabe der vorliegenden Erfindung, ein Messgerät zur Durchführung des Verfahrens zu schaffen.

Die Aufgabe wird gelöst durch das erfindungsgemässe Messverfahren und das erfindungsgemässe Messgerät, wie sie in den unabhängigen Patentansprüchen definiert sind.

Im erfindungsgemässen Messverfahren wird mindestens eine Ultraschallwelle von einem Messgerät ausgesandt; an Grenzflächen des Messobjektes reflektierte Echowellen werden vom Messgerät als Messignal detektiert. Das Messignal wird digitalisiert und im Zeitbereich einer Entfaltungsanalyse unterworfen. Der verwendete Entfaltungsalgorithmus geht vom Ansatz aus, dass sich die Menge "physikalisch sinnvoller" Reflexionssequenzen unter Verwendung realistischer, prüfproblemorientierter A-priori-Wertebereiche einschränken lässt. Das Messignal wird als Faltung einer messobjektabhängigen Reflexionssequenz mit einer messsystemabhängigen Systemantwort aufgefasst. Diese Betrachtungsweise im Zeitbereich führt eigentlich zu einer Baum-basierten Maximum-likelihood-Sequenzschätzung mit exponentiell steigender Komplexität. Bei real interessierenden Problemstellungen kann jedoch diese Komplexität durch Einbezug von vorhandenen prüfproblemorientierten A-priori-Werten und von entsprechenden Daten betreffend Reflexionssequenz vereinfacht werden.

Das erfindungsgemässe Messverfahren verwendet einen neuen Entfaltungsalgorithmus im Zeitbereich, welcher durch Orthogonalisierung und durch eine den vorhandenen A-priori-Wertebereichen entsprechende implementierte Suchstrategie besonders recheneffizient ist. Im erfindungsgemässen Enfaltungsalgorithmus wird ein gegebenes Messignal durch gewichtete additive Überlagerung von zeitlich verschobenen Basisimpulsen (Wavelets) angenähert. Die Form des Basisimpulses lässt sich aus geeigneten Referenzsignalen gewinnen (Kalibrierung, Eichung) und wird als bekannt vorausgesetzt. Dispersion und frequenzabhängige Schallschwächung können dabei durch eine sich mit der Laufzeit veränderbare Form der Basisimpulse berücksichtigt werden. Gewichtung und zeitliche Verschiebung der Basisimpulse wird beispielsweise im Least-Square-Sinn, d. h. durch Minimierung der Fehlerquadratsumme (Summe der Quadrate der Differenzen zwischen Messignal und entfaltetem Signal), optimal ermittelt; es können aber zu diesem Zweck auch andere Optimierungsalgorithmen eingesetzt werden. Für weisses Messrauschen entspricht dies der Lösung mit grösster Wahrscheinlichkeit, der sogenannten Maximum-Likelihood-Lösung.

Die Charakteristika eines Messobjektes können als prüfproblemorientierte A-priori-Werte bei der Charakterisierung eines anderen Messobjektes in prädiktiver Weise weiterverwendet werden. Die A-priori-Werte können im erfindungsgemässen Messverfahren rekursiv bzw. in Form einer abgestuften Bereichskette zum Einsatz kommen. Auf diese Weise ermöglicht die vorliegende Erfindung ein selbstlernendes Messgerät im Sinne eines Expertensystems.

Das erfindungsgemässe Messverfahren erlaubt eine über die reale Digitalisierungsrate hinausgehende Rechen- und Messgenauigkeit, indem in der Entfaltungsanalyse die reale Digitalisierungsrate von der Messauflösung rechnerisch getrennt wird. Die maximal erreichbare Auflösung der Laufzeitmessung ist damit nicht durch die reale Digitalisierungsrate beschränkt. Die zugrunde liegende reale Digitalisierungsrate muss, unabhängig von der gewünschten und damit zum Teil höheren Messauflösung, einzig und allein das bekannte Nyquist-Theorem erfüllen, d. h. sie muss grösser oder gleich der zweifachen Nutzbandbreite des Messignals sein. Mit dem erfindungsgemässen Such- und Entfaltungsalgorithmus können die interessierenden messobjektspezifischen Reflexionssequenzen auch bei stark überlappenden Echos als sogenannte "Spike-Trains" (Pulszug, Folge diskreter Einzelereignisse, unendlich scharfe Spitzen) gewonnen werden. Mit Hilfe geeigneter Schwellwerte und einfacher Kombinatorik kann so aus dem Pulszug die interessierende Laufzeit genau gemessen und mittels Kalibrierung relevante Charakteristika des Messobjektes bestimmt werden.

Zur berührungslosen Charakterisierung von Messobjekten werden im erfindungsgemässen Messverfahren für Luftultraschall optimierte Wandlereinheiten des Messgerätes verwendet. Bei Beschichtungsmaterialien mit relativ kleiner Schallimpedanz (beispielsweise nicht eingebrannten Pulver- oder nicht getrockneten Nasslacken) wird zwar ein Teil der einfallenden Schallenergie an der Grenzfläche zwischen Luft und der Schicht reflektiert, doch dringt ein für die Messung genügend grosser Anteil der Energie in das nichtgehärtete Beschichtungsmaterial ein. Der Übergang zum (beispielsweise metallischen) Substrat stellt wieder einen grösseren Impedanzsprung dar, welcher einen grossen Anteil der Energie reflektiert. Die Laufzeitdifferenz der beiden Echoimpulse kann mit dem erfindungsgemässen Verfahren genau ermittelt werden. Die Schichtdicken, Schallgeschwindigkeiten bzw. Stufenhöhen sind, wie oben beschrieben, direkt mit der Laufzeitdifferenz korreliert und werden direkt aus der Laufzeitdifferenz bestimmt.

Andererseits kann mit dem erfindungsgemässen Messverfahren auch durch ein Koppelmedium hindurch oder in direktem Kontakt mit dem Messobjekt gemessen werden. Die Wandlereinheit des Messgerätes ist in diesem Fall entsprechend anzupassen.

Mit dem erfindungsgemässen Verfahren kann im Impuls-Echo-Modus oder im Sende-Empfangs-Modus gearbeitet werden. Im Impuls-Echo-Modus sind Ultraschallsender und Ultraschallempfänger in einer einzigen Wandlereinheit verwirklicht, im Sende-Empfangs-Modus werden eine erste Wandlereinheit als Ultraschallsender und eine zweite Wandlereinheit als Ultraschallempfänger eingesetzt.

Die Anwendungen für das erfindungsgemässe Verfahren sind vielfältig. So kann es beispielsweise für Dickenmessung, Materialprüfung und Fehlerdetektion bei Beton und bei Baustoffen allgemein zum Einsatz kommen. Es eignet sich gut für Infrastrukturbauten wie Rohre. Insbesondere ist es auch anwendbar bei schwer beschallbaren Materialien wie beispielsweise Metallen, wo wegen hoher Absorption bei hohen Frequenzen nur tiefe Ultraschallfrequenzen eingesetzt werden können. Weiter kann das erfindungsgemässe Verfahren für die Dickenmessung von Beschichtungen aller Art eingesetzt werden, zum Beispiel für Lack- oder Farbschichten, Keramikbeschichtungen und Plasmaschichten. Es können damit nicht nur Dicken einzelner Schichten, sondern auch Dicken mehrerer Schichten eines Schichtsystems bestimmt werden. Entsprechend eignet sich das erfindungsgemässe Verfahren auch für Schichtverbundwerkstoffe, wie sie etwa bei Druckbehältern verwendet werden; die einzelnen Schichten können aus Metall, Kunststoff, Keramik oder anderen Materialien bestehen. Es können ebenfalls Stufen auf Oberflächen oder Oberflächenprofile vermessen werden.

Das erfindungsgemässe Messgerät enthält im wesentlichen folgende Komponenten, welche auf das jeweilige aktuelle Messproblem optimiert werden können: mindestens eine Wandlereinheit, eine Sendeeinheit, eine Empfangseinheit, eine Analog-Digital-Wandlereinheit und ein Mikroprozessorsystem mit Speicher; nach Bedarf können eine Anzeigeeinheit, eine Eingabeeinheit und/oder eine Speichereinheit hinzukommen.

Im folgenden wird die Erfindung anhand von Figuren detailliert beschrieben. Dabei zeigen:

Fig. 1-3      beispielhafte Messanordnungen des erfindungsgemässen Messverfahrens,

Fig. 4 und 5   typische Messignale von Echoimpulsen,

Fig. 6         einen typischen gemessenen Basisimpuls,

Fig. 7 und 8   typische mit dem erfindungsgemässen Entfaltungsalgorithmus entfaltete Signale,

Fig. 9         eine Messanordnung zum Vermessen von Stufen auf einer Oberfläche,

Fig. 10        ein Blockschaltbild einer Ausführungsform eines erfindungsgemässen Messgerätes und

Fig. 11        einen schematischen Querschnitt durch eine Wandlereinheit eines erfindungsgemässen Messgerätes.

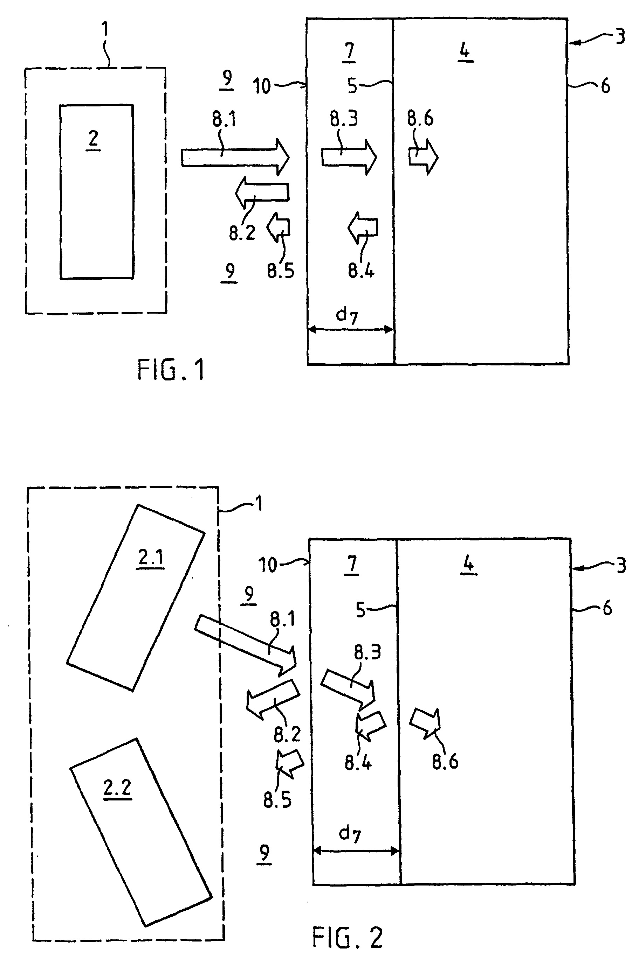

**Figur 1** zeigt eine beispielhafte Messanordnung des erfindungsgemässen Messverfahrens. Ein Messgerät 1 mit einer Wandlereinheit 2 sendet und empfängt Ultraschallwellen, symbolisiert durch Pfeile, deren Richtung die Ausbreitungsrichtung angibt und deren Länge ungefähr die Energie oder die Amplitude der jeweiligen Ultraschallwelle andeutet. Ein Messobjekt 3 besteht beispielsweise aus einem Substrat 4, auf dessen Vorderseite 5 und/oder Rückseite 6 sich zu vermessende Schichten befinden; im dargestellten Beispiel trägt das Substrat 4 nur eine Schicht 7 der Dicke $d_7$ auf der Vorderseite 5. Eine vom Messgerät 1 ausgesandte Ultraschallwelle 8.1, vorzugsweise ein kurzer Ultraschallimpuls, läuft durch ein umgebendes Medium 9 (beispielsweise Luft) auf das Messobjekt 3 zu. Die einfallende Ultraschallwelle 8.1 wird im allgemeinen teilweise an der Grenzfläche 10 zwischen dem umgebenden Medium 9 und der Schicht 7 reflektiert; die reflektierte Ultraschallwelle 8.2 läuft als Echowelle oder Echoimpuls zum Messgerät 1 zurück. Ein transmittierter Teil 8.3 der einfallenden Ultraschallwelle läuft durch die Schicht 7 auf das Substrat 4 (bzw., falls vorhanden, auf eine zweite, nicht eingezeichnete Schicht) zu; falls die Schallimpedanzen der Schicht 7 und des Substrates 4 (bwz., falls vorhanden, einer zweiten Schicht) verschieden sind, wird wiederum ein Teil der Ultraschallwelle reflektiert, und so weiter. So entstehen mehrere Echowellen oder Echoimpulse 8.2, 8.5, die vom Messgerät 1 als Messignal in Funktion der Zeit detektiert werden.

Die in Fig. 1 dargestellte Messanordnung misst im Impuls-Echo-Modus, d. h. das Messgerät 1 ist mit einer einzigen Wandlereinheit 2 ausgestattet, welche zunächst als Ultraschallsender die Ultraschallwelle 8.1 aussendet und danach als Ultraschallempfänger die Echowellen 8.2, 8.5 empfängt.

Im Gegensatz zu Fig. 1 ist in **Fig. 2** eine Messanordnung dargestellt, welche im Sende-Empfangs-Modus misst. Das Messgerät 1 ist mit zwei Wandlereinheiten 2.1, 2.2 ausgestattet; eine erste Wandlereinheit 2.1 wird als Ultraschallsender und eine zweite Wandlereinheit 2.2 als Ultraschallempfänger eingesetzt.

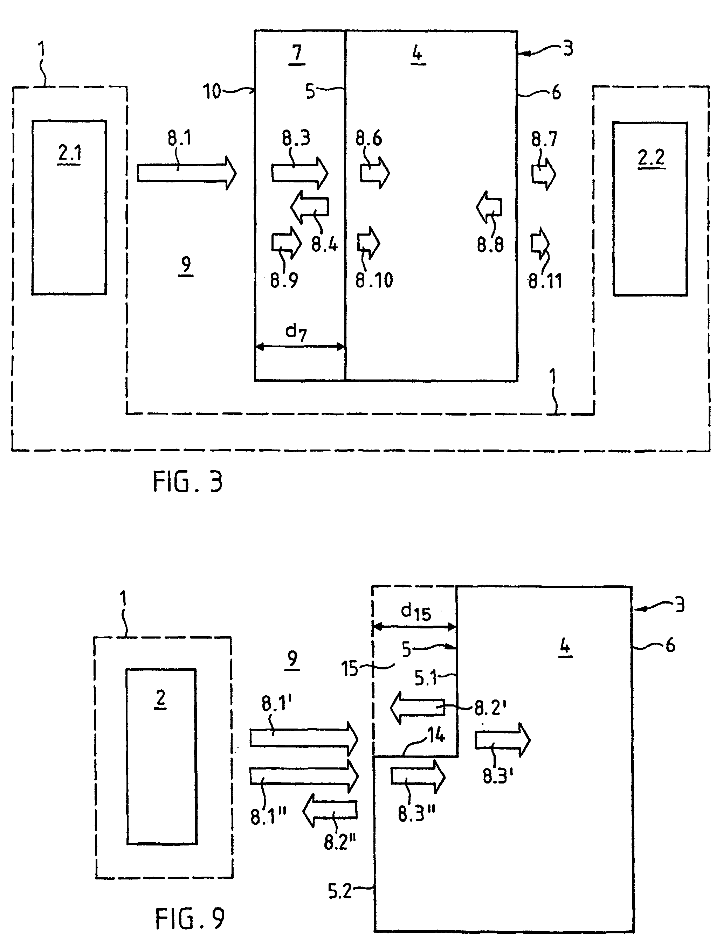

**Figur 3** zeigt eine dritte Messandordnung, welche ebenfalls - wie die Messanordnung von Fig. 2 - im Sende-Empfangs-Modus misst, wobei aber das Messobjekt 3 durchschallt wird. Auch hier sendet eine erste Wandlereinheit 2.1 Ultraschallwellen 8.1 aus; an den Grenzflächen des Messobjektes entstehen Echowellen oder Echoimpulse 8.7, 8.11, welche von der zweiten Wandlereinheit 2.2 empfangen werden. Das erfindungsgemässe Verfahren ist auch zusammen mit anderen Messmodi anwendbar.

Als Medium 9 zwischen dem Messgerät 1 und dem Messobjekt 3 kann einerseits Luft verwendet werden, andererseits auch ein anderes Koppelmedium mit geeignet gewählter Schallimpedanz. Für viele Anwendungen, besonders dann, wenn das Messobjekt 3 durch ein Koppelmedium beschädigt oder kontaminiert werden könnte, wird Luft bevorzugt. Das Koppelmedium muss nicht etwa ruhen; beispielsweise kann durch einen oder mehrere Wasserstrahlen, welche vom Messgerät 1 her auf das Messobjekt 3 gespritzt werden, hindurch gemessen werden.

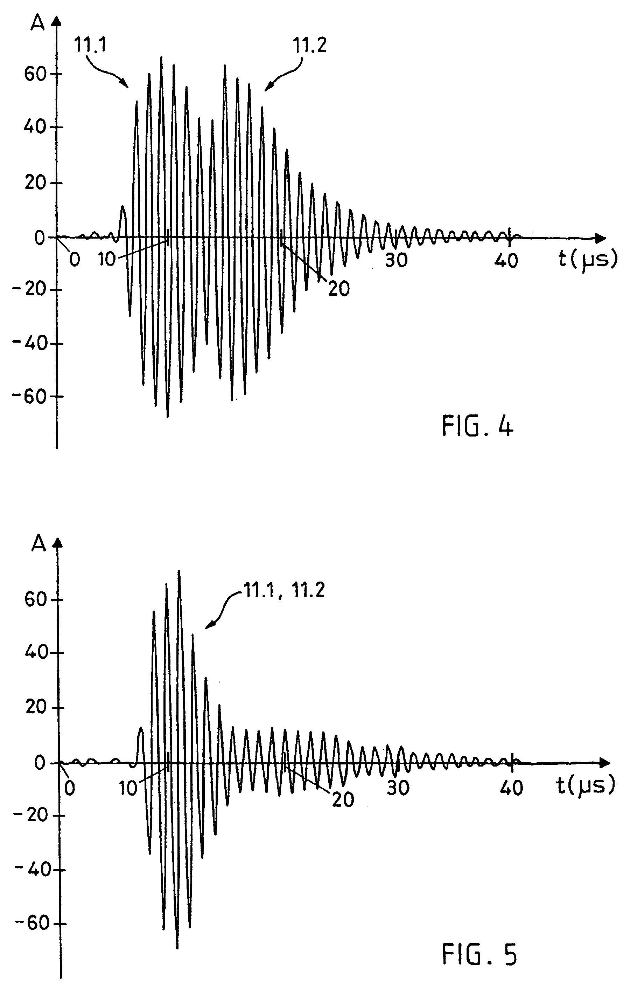

**Figur 4** zeigt einen typischen Verlauf der Amplitude A eines detektierten, der Einfachheit halber aus nur zwei Echoimpulsen 11.1, 11.2 bestehenden Messignals A(t) als Funktion der Zeit t. Eine Interpretation eines solchen Messignals A(t) ist aus folgenden Gründen problematisch. Die grossen Breiten der Echoimpulse 11.1, 11.2 machen es schwierig, ihre genaue Lage zu bestimmen. Immerhin sind im vorliegenden Beispiel die beiden Echoimpulse 11.1, 11.2 noch einigermassen voneinander unterscheidbar. Bei dünnen Messobjekten 3 können aber Messignale A(t) auftreten, bei welchen die Echoimpulse zusammenzufallen scheinen und kaum voneinander unterscheidbar sind. **Figur 5** zeigt ein solches Messignal A(t), bei welchem es von Auge nicht mehr möglich ist, zwischen zwei verschiedenen Ultraschallimpulsen 11.1, 11.2 zu unterscheiden. Trotzdem können mit dem erfindungsgemässen Messverfahren die interessierenden Reflexionssequenzen als scharfe Spitzen gewonnen werden. Mit bekannten Verfahren liesse sich die Dicke des dünnen Messobjektes 3 bzw. die Schallgeschwindigkeit im dünnen Messobjekt 3 nur unsicher und ungenau oder gar nicht aus dem Messignal A(t) ermitteln.

Im erfindungsgemässen Messverfahren wird das detektierte Signal A(t) als Faltung einer bekannten, messsystemabhängigen Systemantwort mit einer gesuchten, messobjektabhängigen Reflexionssequenz aufgefasst; das Messignal A(t) enthält zusätzlich additives Rauschen als Störung. Mit einem geeigneten Entfaltungsalgorithmus wird nun das Messignal A(t) entfaltet, um die gesuchte Reflexionssequenz zu erhalten. Der verwendete Entfaltungsalgorithmus geht vom Ansatz aus, dass sich die Menge "physikalisch sinnvoller" Reflexionssequenzen unter Verwendung realistischer, prüfproblemorientierter A-priori-Wertebereiche einschränken lässt. Durch Orthogonalisierung und durch eine den vorhandenen A-priori-Wertebereichen entsprechende implementierte Suchstrategie im Zeitbereich ist der Entfaltungsalgorithmus recheneffizient.

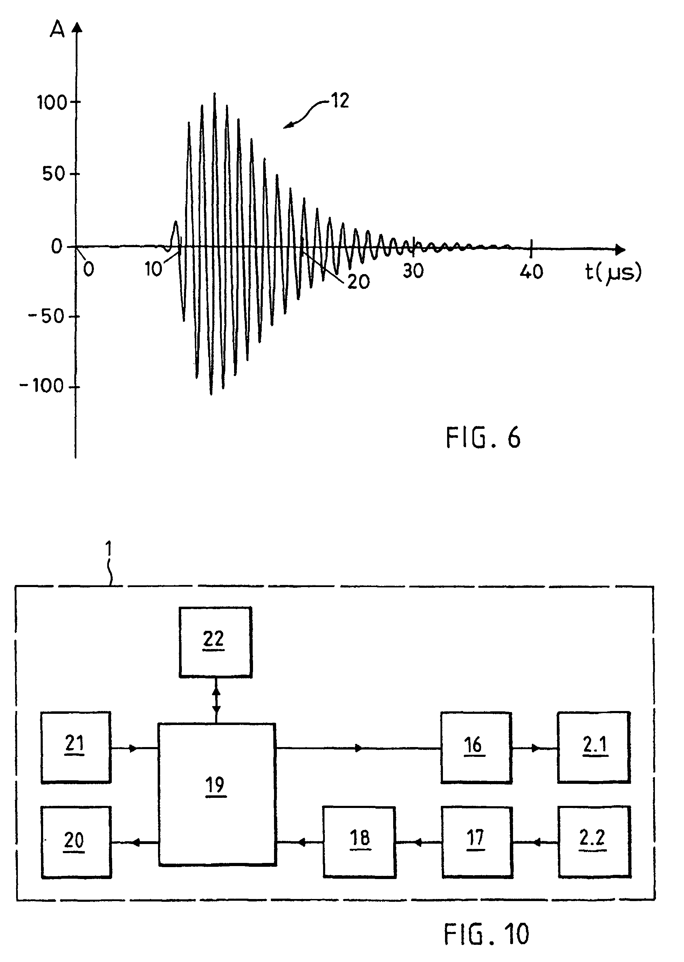

Das Messignal A(t) wird durch gewichtete, additive Überlagerung von zeitlich verschobenen Basisimpulsen 12 (Wavelets) angenähert. Die Form der Basisimpulse 12 lässt sich aus geeigneten Referenzsignalen gewinnen. Ein Beispiel für einen gemessenen Basisimpuls 12 ist in **Fig. 6** dargestellt; es handelt sich um die Mittelung mehrerer Referenzmessungen von Echoimpulsen, welche durch Reflexion an einer ebenen Stahloberfläche entstanden sind. Die Gewichtung und die zeitliche Verschiebung der Basisimpulse 12 wird vorzugsweise durch Minimierung der Fehlerquadratsumme (Least-Square) in Bezug auf das Messignal A(t) optimal ermittelt, d. h. die Summe der Quadrate der Differenzen zwischen Messignal A(t) und berechnetem Signal wird ermittelt. Es können zu diesem Zweck aber auch andere, an sich bekannte Optimierungsalgorithmen eingesetzt werden. Die Rechen- und Messgenauigkeit geht über die reale Digitalisierungsrate hinaus; die Dickenauflösung beträgt also unter Umständen nur einen Bruchteil der verwendeten Ultraschallwellenlänge im Messobjekt. Mit Hilfe geigneter Schwellwerte und einfacher Kombinatorik wird aus dem Messignal die interessierende Laufzeit genau gemessen, und mittels Kalibrierung werden relevante Charakteristika des Messobjektes wie Materialdicke, Schallgeschwindigkeit bzw. Stufenhöhe bestimmt.

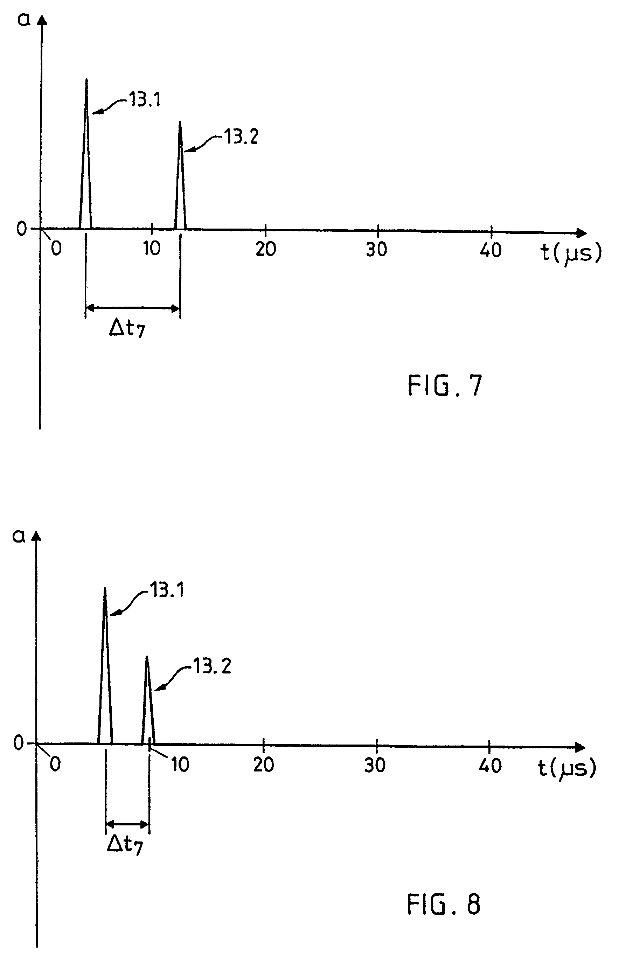

In den **Figuren 7 bzw. 8** sind erfindungsgemäss entfaltete Signale a(t), d. h. Amplituden a in Funktion der Zeit t, dargestellt, welche beispielsweise den Messignalen der Figuren 4 bzw. 5 entsprechen können. Sie bestehen im wesentlichen aus scharfen Spitzen 13.1, 13.2, welche den Echoimpulsen von den verschiedenen Grenzflächen des Messobjektes 3 entsprechen. So entspricht beispielsweise die erste Spitze 13.1 dem Echoimpuls 8.2 von der Grenzfläche zwischen dem umgebenden Medium 9 und der Schicht 7, die zweite Spitze 13.2 dem Echoimpuls 8.5 von der Grenzfläche zwischen der Schicht 7 und dem Substrat 4, und so weiter. Positive Amplituden a > 0 entsprechen Übergängen zwischen einem Medium mit kleiner Schallimpedanz zu einem Medium mit grösserer Schallimpedanz, negative Amplituden a < 0 dem umgekehrten Fall. Der Betrag |a| der Amplituden ist im wesentlichen gegeben durch das Verhältnis der Schallimpedanzen an einer Grenzfläche und durch die Schallschwächung, welche die Ultraschallwelle erfahren hat. Dank der Schärfe der Spitzen 13.1, 13.2 lassen sich ihre Lagen auf der Zeitachse genau bestimmen. Die Abstände zwischen den Spitzen entsprechen den Laufzeitdifferenzen $\Delta t_i$, aus denen bei bekannten Schallgeschwindigkeiten $c_i$ die gesuchten Schichtdicken $d_i$ gemäss der Formel

$$d_i = c_i \Delta t_i / 2$$

berechnet werden. Der Index i kennzeichnet jeweils ein Medium bzw. eine Schicht des Messobjektes 3, beispielsweise ist $d_7$ die Dicke der in den Figuren 1-3 dargestellten Schicht 7. Falls die Schichtdicken $d_i$ bekannt sind, können aus dem entfalteten Signal a(t) natürlich die Schallgeschwindigkeiten $c_i$ ermittelt werden.

Der Dickenmessbereich des erfindungsgemässen Messverfahrens ist sehr gross. Nach unten ist der Messbereich begrenzt durch die Auflösung des Messverfahrens; wie oben beschrieben, ist die Auflösungsgrenze einiges kleiner als eine Ultraschallwellenlänge im Messobjekt 3. Nach oben ist der Messbereich begrenzt durch durch Absorption im Messobjekt 3; solange aber noch ein Echosignal genügend grosser Amplitude detektiert werden kann, können mit dem erfindungsgemässen Verfahren auch Messignale A(t) ausgewertet werden, bei welchen die Echoimpulse einen im Vergleich mit ihrer Halbwertsbreite grossen Abstand haben. Im allgemeinen werden bei stark ultraschallschwächenden Materialien wie z. B. Metallguss, Mauerwerk etc. vorzugsweise tiefe Ultraschallfrequenzen verwendet, um die Absorption in Grenzen zu halten, und bei schwach ultraschallschwächenden Materialien wie z. B. Keramik werden vorzugsweise hohe Frequenzen verwendet, um eine möglichst hohe Auflösung zu erreichen. Die Breite der verwendeten Ultraschallimpulse wird vorteilhafterweise dem Messproblem angepasst.

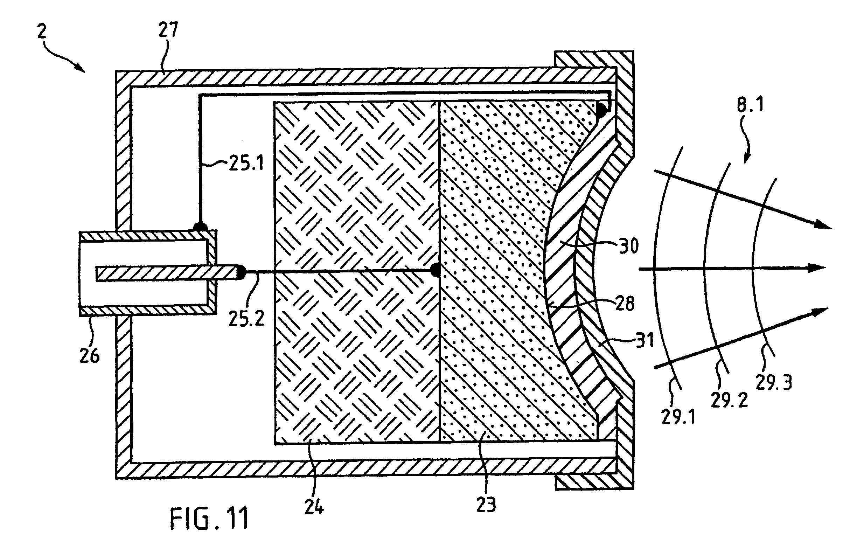

In **Fig. 9** ist eine spezielle Variante des erfindungsgemässen Messverfahrens schematisch dargestellt, analog zu Fig. 1. Es handelt sich hierbei um eine Anwendung zum Vermessen von Stufen 14 auf einer Oberfläche 5 eines Messobjektes 3. Die zu vermessende Stufe 14 teile die Oberfläche 5 des Messobjektes 3 in eine erste Teilfläche 5.1 und eine zweite Teifläche 5.2. Die Ultraschallwelle wird so auf die Oberfläche 5 des Messobjektes 3 ausgesandt, dass ein erster Teil 8.1' davon auf die erste Teilfläche 5.1 und ein zweiter Teil 8.1" davon auf die zweite Teilfläche 5.2 fällt. Der erste Teil 8.1' und der zweite Teil 8.1" der Ultraschallwelle werden von den Teilflächen 5.1, 5.2 teilweise reflektiert und die reflektierten Teilwellen 8.2', 8.2" wie oben beschrieben detektiert und ausgewertet. Eigentlich handelt es sich auch bei dieser Verfahrensvariante um eine Dickenmessung, wobei die Dicke $d_{15}$ einer virtuellen Luftschicht 15 über der ersten Teilfläche 5.1 gemessen wird. Eine in Fig. 9 dargestellte Stufe 14 stellt nur einen Spezialfall einer dreidimensionalen Struktur auf einer Oberfläche 5 eines Messobjektes 3 dar. Analog zur oben beschriebenen Stufenvermessung kann mit dem erfindungsgemässen Verfahren, noch allgemeiner, ein Oberflächenprofil eines Messobjektes 3 vermessen werden.

**Figur 10** zeigt schematisch ein beispielhaftes Blockschaltbild eines erfindungsgemässen Messgerätes 1. Das Messgerät 1 enthält beispielsweise zwei Wandlereinheiten 2.1, 2.2, welche elektrische Energie in Ultraschallenergie und/oder umgekehrt umwandeln, beispielsweise piezoelektrische Wandler. Wie anlässlich des Beispiels von Fig. 1 erläutert, kann das Messgerät 1 auch mit nur einer Wandlereinheit 2 ausgestattet sein; es kann auch vorteilhaft sein, mehr als zwei Wandlereinheiten einzusetzen. Eine Sendeeinheit 16 versorgt die erste Wandlereinheit 2.1 mit den nötigen elektrischen Signalen. Die Sendeeinheit 16 kann beispielsweise einen eher breitbandigen Entladungsstoss (Spike), eine eher schmalbandige unipolare oder bipolare Rechteckimpulsfolge (Toneburst) oder einen gezielt gesteuerten bzw. geformten Sendeimpuls erzeugen. Eine Empfangseinheit 17 ist mit analogen Filtern und Verstärkern ausgestattet; letztere können beispielsweise linear oder logarithmisch verstärken. In einer Analog-Digital-Wandlereinheit 18 wird das analoge elektrische Empfangssignal in ein digitales Signal umgewandelt. Zur Steuerung und Auswertung wird vorzugsweise ein Mikroprozessorsystem 19 mit einem (nicht eingezeichneten) Speicher verwendet.

Besonders in denjenigen Anwendungen, wo das Messgerät 1 autonom verwendet wird, ist es vorzugsweise mit einer Anzeigeeinheit 20, beispielsweise einer Anzeige, einem Bildschirm oder einem Drucker, und/oder einer Eingabeeinheit 21, beispielsweise einer Tastatur, ausgestattet. Anzeigeeinheit 20 und Eingabeeinheit 21 dienen dem Datenaustausch zwischen dem Messgerät 1 und einem (nicht eingezeichneten) Benützer. In anderen Anwendungen kann das erfindungsgemässe Messgerät 1 in einem (nicht eingezeichneten) grösseren System, beispielsweise einem Fertigungsroboter, integriert sein. Dann kann auf eine Anzeigeeinheit 20 und Eingabeeinheit 21 verzichtet werden, und die Daten zwischen dem Messgerät 1 und dem System werden über an sich bekannte Datenleitungen ausgetauscht. Weiter kann das Messgerät 1 eine zusätzliche Speichereinheit 22 zur Speicherung und Archivierung der Messdaten enthalten. Es können beispielsweise die prüfproblemorientierten A-priori-Werte in einer solchen Speichereinheit 22 gespeichert und für die Entfaltung von späteren Messungen daraus hervorgeholt werden.

In **Fig. 11** ist ein Querschnitt durch eine einfache Ausführungsform einer Wandlereinheit 2 eines erfindungsgemässen Messgerätes 1 dargestellt. Die Wandlereinheit 2 enthält einen oder mehrere Ultraschallwandler 23 zur Umwandlung von elektrischer Energie in Ultraschallenergie und/oder zur Umwandlung von Ultraschallenergie in elektrische Energie. Zu diesem Zweck kann beispielsweise der piezoelektrische oder der magnetostriktive Effekt ausgenützt werden; entsprechend werden die Wandlermaterialien gewählt. Speziell für Luftultraschallmessgeräte kann es vorteilhaft sein, einen Composit-Ultraschallwandler zu verwenden, welcher der betreffenden Anwendung angepasst werden kann. Der Ultraschallwandler 23 ist vorzugsweise auf einem Dämpfungskörper 24 befestigt, welcher mechanisch den Ultraschallwandler 23 dämpft und dadurch die Erzeugung kurzer Ultraschallimpulse ermöglicht. Elektrische Signalleitungen 25.1, 25.2 verbinden den Ultraschallwandler 23 mit einer Anschlussbuchse 26. Die elektrischen Signalleitungen 25.1, 25.2 können mit (nicht eingezeichneten) Mitteln zur Leistungsanpassung des Ultraschallwandlers 23, beispielsweise einer Anpassspule, versehen sein. Weiter ist die Wandlereinheit 2 mit einem Gehäuse 27 ausgestattet.

Der Ultraschallwandler 2 kann zur Beeinflussung der Ausbreitungsrichtungen und/oder der Wellenformen der Ultraschallwellen mindestens eine geneigte ebene Fläche und/oder mindestens eine gekrümmte Fläche aufweisen. Im Beispiel von Fig. 11 ist die vordere Fläche 28 sphärisch nach Innen gekrümmt, was zur Folge hat, dass eine ausgesandte Ultraschallwelle die Form einer einlaufenden Kugelwelle hat, d. h. fokussiert ist. Eine solche ausgesandte Kugelwelle 8,1 ist schematisch mit einigen ihrer Phasenflächen 29.1, 29.2, 29.3 in Fig. 11 eingezeichnet.

Zur Optimierung der Wandlereinheit 2 kann auf dem Ultraschallwandler 23 eine Anpassschicht 30 mit geeigneter Schallimpedanz aufgebracht sein. Eine oder mehrere Grenzflächen der Anpassschicht können, möglicherweise anders als der Ultraschallwandler 23, geneigt oder gekrümmt sein. Dadurch können wiederum Ausbreitungsrichtungen und/oder Wellenformen von Ultraschallwellen beeinflusst werden; mit einer sphärischen Grenzfläche einer Anpassschicht 30 kann eine Ultraschallwelle beispielsweise fokussiert werden. Eine Schutzschicht 31 kann die verschiedenen Elemente 23-27, 30 der Wandlereinheit 2 vor unerwünschten äusseren physikalischen und/oder chemischen Einflüssen schützen.

Zusammengefasst wird beim erfindungsgemässen Verfahren zur Charakterisierung von Messobjekten 3 mittels Ultraschall mindestens eine Ultraschallwelle 8.1 von einem Messgerät 1 ausgesandt. An Grenzflächen (5, 10) des Messobjektes 3 reflektierte Echowellen 8.2, 8.5 werden vom Messgerät 1 als Messignal A(t) detektiert. Charakteristika des Messobjektes 3 werden aus Laufzeitdifferenzen $\Delta t$ der Echowellen 8.2, 8.5 ermittelt, indem das Messignal A(t) digitalisiert und im Zeitbereich durch gewichtete additive Überlagerung von zeitlich verschobenen Basisimpulsen 12 einer durch prüfproblemorientierte A-priori-Wertebereiche eingegrenzten Entfaltungsanalyse unterworfen wird. Ein erfindungsgemässes Messgerät 1 zur Durchführung des Verfahrens hat mindestens eine Wandlereinheit 2, welche mindestens einen Ultraschallwandler 23 zur Umwandlung von elektrischer Energie in Ultraschallenergie und/oder zur Umwandlung von Ultraschallenergie in elektrische Energie enthält, eine Ultraschall-Sendeeinheit 16 zur Versorgung der Wandlereinheit 2 mit elektrischen Signalen, eine Ultraschall-Empfangseinheit 17, eine Analog-Digital-Wandlereinheit 18 zur Umwandlung eines analogen elektrischen Signals in ein digitales Signal und ein Mikroprozessorsystem 19 zur Steuerung und Auswertung.

**Patentansprüche**

1. Verfahren zur Charakterisierung von Messobjekten (3) mittels Ultraschall, wobei mindestens eine Ultraschallwelle (8.1) von einem Messgerät (1) ausgesandt wird, an Grenzflächen (5, 10) des Messobjektes (3) reflektierte Echowellen (8.2, 8.5) vom Messgerät (1) als Messignal (A(t)) detektiert werden und Charakteristika des Messobjektes (3) aus Laufzeitdifferenzen ($\Delta t$) der Echowellen (8.2, 8.5) ermittelt werden, indem das Messignal (A(t)) digitalisiert und im Zeitbereich durch gewichtete additive Überlagerung von zeitlich verschobenen Basisimpulsen (12) einer durch prüfproblemorientierte A-priori-Wertebereiche eingegrenzten Entfaltungsanalyse unterworfen wird.

2. Verfahren nach Anspruch 1, **dadurch gekennzeichnet, dass** die Gewichtung und die zeitliche Verschiebung der Basisimpulse (12) durch Minimierung der Summe der Quadrate der Differenzen zwischen Messignal (A(t)) und berechnetem Signal ermittelt wird.

3. Verfahren nach Anspruch 1 oder 2, **dadurch gekennzeichnet, dass** die Form der Basisimpulse (12) aus einer Kalibrier- oder Eichmessung gewonnen wird.

4. Verfahren nach einem der Ansprüche 1-3, **dadurch gekennzeichnet, dass** die Form der Basisimpulse (12) von der Laufzeit abhängt.

5. Verfahren nach einem der Ansprüche 1-4, **dadurch gekennzeichnet, dass** bei der Entfaltungsanalyse eine Orthogonalisierung und eine implementierte Suchstrategie benützt wird, wodurch die Entfaltungsanalyse recheneffizient wird.

6. Verfahren nach einem der Ansprüche 1-5, **dadurch gekennzeichnet, dass** die Charakteristika eines Messobjektes (3) als prüfproblemorientierte A-priori-Werte bei der Charakterisierung eines anderen Messobjektes weiterverwendet werden.

7. Verfahren nach einem der Ansprüche 1-6, **dadurch gekennzeichnet, dass** in der Entfaltungsanalyse die reale Digitalisierungsrate von der Messauflösung rechnerisch getrennt wird, wodurch eine über die reale Digitalisierungsrate hinausgehende Rechen- und Messgenauigkeit ermöglicht wird.

8. Verfahren nach einem der Ansprüche 1-7, **dadurch gekennzeichnet, dass** sich die Ultraschallwellen (8.1, 8.2, 8.5, 8.7, 8.11) zwischen dem Messgerät (1) und dem Messobjekt (3) in Luft ausbreiten.

9. Verfahren nach einem der Ansprüche 1-7, **dadurch gekennzeichnet, dass** sich die Ultraschallwellen (8.1, 8.2, 8.5, 8.7, 8.11) zwischen dem Messgerät (1) und dem Messobjekt (3) in mindestens einem Kontaktmedium ausbreiten.

10. Verfahren nach einem der Ansprüche 1-7, **dadurch gekennzeichnet, dass** sich die Ultraschallwellen (8.1, 8.2, 8.5, 8.7, 8.11) zwischen dem Messgerät (1) und dem Messobjekt (3) in mindestens einem Wasserstrahl ausbreiten

11. Verfahren nach einem der Ansprüche 1-10, **dadurch gekennzeichnet, dass** bei bekannten Schallgeschwindigkeiten ($c_i$) im Messobjekt (3) aus den Laufzeitdifferenzen ($\Delta t$) Dicken ($d_i$) als Charakteristika des Messobjektes (3) ermittelt werden.

12. Verfahren nach einem der Ansprüche 1-10, **dadurch gekennzeichnet, dass** bei bekannten Dik-

ken ($d_i$) des Messobjektes aus den Laufzeitdifferenzen (Ät) Schallgeschwindigkeiten (c,) als Charakteristika des Messobjektes (3) ermittelt werden.

13. Verfahren nach einem der Ansprüche 1-10, **dadurch gekennzeichnet, dass** Höhen ($d_{15}$) von Stufen (14) auf der Oberfläche (5) des Messobjektes (3) als Charakteristika des Messobjektes (3) ermittelt werden.

14. Messgerät zur Durchführung des Verfahrens nach Anspruch 1, mit mindestens einer Wandlereinheit (2), welche mindestens einen Ultraschallwandler (23) zur Umwandlung von elektrischer Energie in Ultraschallenergie und/oder zur Umwandlung von Ultraschallenergie in elektrische Energie enthält, einer Ultraschall-Sendeeinheit (16) zur Versorgung der Wandlereinheit (2) mit elektrischen Signalen, einer Ultraschall-Empfangseinheit (17), einer Analog-Digital-Wandlereinheit (18) zur Umwandlung eines analogen elektrischen Signals in ein digitales Signal und einem Mikroprozessorsystem (19) zur Steuerung und Auswertung, wobei das Mikroprozessorsystem Speichermittel aufweist, und folgende Verfahrensschritte veranlasst :

   - Aussenden mindestens einer Ultrasch (8.1),
   - Detektieren der an Grenzflächen (5,10) des Messobjektes (3) reflektierten Echowellen (8.2, 8.5) als Messignal (A(t))
   - Ermitteln von Charakteristika des Messobjektes (3) aus Laufzeitdifferenzen (Δt) der Echowellen (8.2, 8.5), indem das Messignal (A(t)) digitalisiert und im Zeitbereich durch gewichtete additive Überlagerung von zeitlich verschobenen Basisimpulsen (12) einer durch prüfproblemorientierte A-priori-Wertebereiche eingegrenzten Entfaltungsanalyse unterworfen wird.

15. Messgerät nach Anspruch 14, **dadurch gekennzeichnet, dass** es mindestens einen piezoelektrischen oder magnetostriktiven Ultraschallwandler (23) enthält.

16. Messgerät nach Anspruch 15, **dadurch gekennzeichnet, dass** es mindestens einen Composit-Ultraschallwandler (23) enthält.

17. Messgerät nach einem der Ansprüche 14-16, **dadurch gekennzeichnet, dass** mindestens ein Ultraschallwandler (23) mindestens eine ebene geneigte Fläche und/oder mindestens eine gekrümmte Fläche (28) aufweist, um Ausbreitungsrichtungen und/oder Wellenformen von Ultraschallwellen (8.1) zu beeinflussen.

18. Messgerät nach Anspruch 17, **dadurch gekenn-**

zeichnet, dass mindestens ein Ultraschallwandler (23) mindestens eine sphärische Fläche (28) aufweist, um Ultraschallwellen (8.1) zu fokussieren.

19. Messgerät nach einem der Ansprüche 14-18, **dadurch gekennzeichnet, dass** mindestens ein Ultraschallwandler (23) mit mindestens einer Anpassschicht (30) mit geeigneter Schallimpedanz versehen sind.

20. Messgerät nach Anspruch 19, **dadurch gekennzeichnet, dass** mindestens eine Anpassschicht (30) mindestens eine ebene geneigte Fläche und/oder mindestens eine gekrümmte Fläche aufweist, um Ausbreitungsrichtungen und/oder Wellenformen von Ultraschallwellen zu beeinflussen.

21. Messgerät nach Anspruch 20, **dadurch gekennzeichnet, dass** mindestens eine Anpassschicht (30) mindestens eine sphärische Fläche aufweist, um Ultraschallwellen zu fokussieren.

22. Messgerät nach einem der Ansprüche 14-21, **dadurch gekennzeichnet, dass** die Ultraschall-Sendeeinheit (16) einen Entladungsstoss (Spike), eine unipolare oder bipolare Rechteckimpulsfolge (Toneburst) oder einen gezielt gesteuerten Sendeimpuls erzeugt.

23. Messgerät nach einem der Ansprüche 14-22, **dadurch gekennzeichnet, dass** die Ultraschall-Empfangseinheit (17) analoge Filter- und Verstärkerstufen enthält.

24. Messgerät nach einem der Ansprüche 14-23, **gekennzeichnet durch** eine Anzeigeeinheit (20) und eine Eingabeeinheit (21).

**Claims**

1. A method for the characterisation of test objects (3) by way of ultrasound, wherein at least one ultrasound wave (8.1) is emitted by a measuring apparatus (1), echo waves (8.2, 8.5) reflected at border surfaces (5, 10) of the test object (3) are detected by the measuring apparatus (1) as a measurement signal (A(t)) and characteristics of the test object (3) are determined from running time differences (Δt) of the echo waves (8.2, 8.5) in that the measurement signal (A(t)) is digitalised and in the time domain by way of weighted additive superposition of temporally shifted base impulses (12) is subjected to a deconvolution analysis limited by test problem orientated A-priori value ranges.

2. A method according to claim 1, **characterised in that** the weighting and the temporal shifting of the base impulses (12) is determined by minimising the sum of the squares of the differences between the measurement signal (A(t)) and the calculated signal.

3. A method according to claim 1 or 2, **characterised in that** the shape of the base impulses (12) is obtained by a calibration or gauging measurement.

4. A method according to one of the claims 1-3, **characterised in that** the shape of the base impulses (12) is dependent on the running time.

5. A method according to one of the claims 1-4, **characterised in that** with the deconvolution analysis an orthogonalisation and an implemented search strategy is used, by which means the deconvolution analysis is computing-efficient.

6. A method according to one of the claims 1-5, **characterised in that** the characteristics of a test object (3) are used further as test problem orientated A-priori values when **characterising** another test object.

7. A method according to one of the claims 1-6, **characterised in that** in the deconvolution analysis the real digitalisation rate is separated from the measuring resolution in a numerical calculated manner, by which means a computing and measuring accuracy going beyond the real digitalisation rate is made possible.

8. A method according to one of the claims 1-7, **characterised in that** the ultrasound waves (8.1, 8.2, 8.5, 8.7, 8.11) between the measuring apparatus (1) and the test object (3) propagate in air.

9. A method according to one of the claims 1-7, **characterised in that** the ultrasound waves (8.1, 8.2, 8.5, 8.7, 8.11) between the measuring apparatus (1) and the test object (3) propagate in at least one contact medium.

10. A method according to one of the claims 1-7, **characterised in that** the ultrasound waves (8.1, 8.2, 8.5, 8.7, 8.11) between the measuring apparatus (1) and the test object (3) propagate in at least one water jet.

11. A method according to one of claims 1-10, **characterised in that** with known sound velocities ($c_i$) in the test object (3) one determines thicknesses ($d_i$) as characteristics of the test object (3) from the running time differences ($\Delta t$).

12. A method according to one of the claims 1-10, **characterised in that** that with known thicknesses ($d_i$)

of the test object one determines sound speeds ($c_i$) as characteristics of the test object (3) from the running time differences ($\Delta t$)

13. A method according to one of the claims 1-10, **characterised in that** heights ($d_{15}$) of steps (14) on the surface (5) of the test object (3) are determined as characteristics of the test object (3).

14. A measuring apparatus for carrying out the method according to claim 1, with at least one transducer unit (2) which contains at least one ultrasound transducer (23) for converting electrical energy into ultrasound energy and/or for converting ultrasound energy into electrical energy, with an ultrasound emitting unit (16) for supplying the transducer unit (2) with electrical signals, with an ultrasound receiver unit (17), with an analog-digital transducer unit (18) for converting an analog electrical signal into a digital signal and with a microprocessor system (19) for controlling and evaluation, wherein the microprocessor system comprises memory means and creates the following method steps:

   - emitting at least one ultrasound wave (8.1)
   - detecting the echo waves (8.2, 8.5) reflected at border surfaces (5, 10) of the test object (3) as a measurement signal (A(t))
   - determining characteristics of the test object (3) from running time differences ($\Delta t$) of the echo waves (8.2, 8.5) in that the measurement signal (A(t)) is digitalised and in the time domain by way of weighted additive superposition of temporally shifted base impulses (12) is subjected to a deconvolution analysis limited by test problem orientated A-priori value ranges.

15. A measuring apparatus according to claim 14, **characterised in that** it contains at least one piezoelectric or magnetostrictive ultrasound transducer (23).

16. A measuring apparatus according to claim 15, **characterised in that** it contains at least one composite ultrasound transducer.

17. A measuring apparatus according to one of the claims 14-16, **characterised in that** at least one ultrasound transducer (23) comprises at least one planar inclined surface and/or at least one arcuate surface (28) in order to influence propagation directions and/or wave shapes of ultrasound waves (8.1).

18. A measuring apparatus according to claim 17, **characterised in that** at least one ultrasound transducer (23) comprises at least one spherical surface (28) in order to focus ultrasound waves (8.1).

**19.** A measuring apparatus according to one of the claims 14-18, **characterised in that** at least one ultrasound transducer (23) is provided with at least one adaptation layer (30) with a suitable sound impedance.

**20.** A measuring apparatus according to claim 19, **characterised in that** at least one adaptation layer (30) comprises at least one planar, inclined surface and/or at least one arcuate surface in order to influence propagation directions and/or wave shapes of ultrasound waves.

**21.** A measuiring aparatus according to claim 20, **characterised in that** at least one adaptation layer (30) comprises at least one spherical surface in order to focus ultrasound waves.

**22.** A measuring apparatus according to one of the claims 14-21, **characterised in that** the ultrasound emitting unit (16) produces a discharge surge (spike), a unipolar or bipolar rectangular impulse (toneburst) or a targetted controlled emission impulse.

**23.** A measuring apparatus according to one of the claims 14-22, **characterised in that** the ultrasound receiving unit (17) comprises analog filter and amplifier steps.

**24.** A measuring apparatus according to one of the claims 14-23, **characterised by** a display unit (20) and an input unit (21).


**Revendications**

**1.** Procédé de caractérisation d'objets de mesure (3) par ultrasons, dans lequel au moins une onde ultrasonique (8.1) est émise par un appareil de mesure (1), des ondes d'écho (8.2,8.5) réfléchies sur des surfaces de frontière (5, 10) de l'objet de mesure (3) étant détectées par l'appareil de mesure (1) comme signal de mesure (A(t)) et des caractéristiques de l'objet de mesure (3) étant déterminées comme différences de durée de parcours ($\Delta t$) des ondes d'écho (8.2, 8.5) en numérisant le signal de mesure (A(t)) et en le soumettant dans la plage temporelle par superposition additive pondérée d'impulsions de base (12) décalées dans le temps à une analyse par étalement délimité par des plages de valeurs *a priori* orientées vers la solution de problèmes.

**2.** Procédé selon la revendication 1, **caractérisé en ce que** la pondération et le décalage dans le temps des impulsions de base (12) sont déterminés par minimisation de la somme des carrés des différences entre le signal de mesure (A(t)) et le signal calculé.

**3.** Procédé selon la revendication 1 ou 2, **caractérisé en ce que** la forme des impulsions de base (12) est obtenue à partir d'une mesure de calibrage ou d'étalonnage.

**4.** Procédé selon l'une des revendications 1 à 3, **caractérisé en ce que** la forme des impulsions de base (12) dépend de la durée du parcours.

**5.** Procédé selon l'une des revendications 1 à 4, **caractérisé en ce que** lors de l'analyse par étalement, on utilise une orthogonalisation et une stratégie de recherche implantée, pour rendre plus efficaces les calculs de l'analyse par étalement.

**6.** Procédé selon l'une des revendications 1 à 5, **caractérisé en ce que** les caractéristiques de l'objet de mesure (3) sont réutilisées comme valeurs *a priori* orientées vers la solution de problèmes lors de la caractérisation d'un autre objet de mesure.

**7.** Procédé selon l'une des revendications 1 à 6, **caractérisé en ce que** lors de l'analyse par étalement, le taux réel d'échantillonnage est séparé par calcul de la résolution de la mesure, ce qui permet une précision de calcul et de mesure qui découle du taux réel d'échantillonnage.

**8.** Procédé selon l'une des revendications 1 à 7, **caractérisé en ce que** les ondes ultrasoniques (8.1, 8.2, 8.5, 8.7, 8.11) se propagent dans l'air entre l'appareil de mesure et l'objet de mesure.

**9.** Procédé selon l'une des revendications 1 à 7, **caractérisé en ce que** les ondes ultrasoniques (8.1, 8.2, 8.5, 8.7, 8.11) se propagent dans au moins un milieu de contact entre l'appareil de mesure et l'objet de mesure.

**10.** Procédé selon l'une des revendications 1 à 7, **caractérisé en ce que** les ondes ultrasoniques (8.1, 8.2, 8.5, 8.7, 8.11) se propagent dans au moins un jet d'eau entre l'appareil de mesure et l'objet de mesure.

**11.** Procédé selon l'une des revendications 1 à 10, **caractérisé en ce que** lorsque les vitesses ($c_i$) de propagation du son dans l'objet de mesure (3) sont connues, les épaisseurs ($d_i$) sont déterminées comme caractéristiques de l'objet de mesure (3) à partir des différences de durée de parcours ($\Delta t$).

**12.** Procédé selon l'une des revendications 1 à 10, **caractérisé en ce que** lorsque les épaisseurs ($d_i$) de l'objet de mesure sont connues, les vitesses ($c_i$) de

propagation du son sont déterminées comme caractéristiques de l'objet de mesure (3) à partir des différences de durée de parcours (Ät).

**13.** Procédé selon l'une des revendications 1 à 10, **caractérisé en ce que** les hauteurs ($d_{15}$) des gradins (14) présents à la surface de l'objet de mesure (3) sont déterminées comme caractéristiques de l'objet de mesure (3).

**14.** Appareil de mesure en vue de la mise en oeuvre du procédé selon la revendication 1, comportant au moins une unité de conversion (2) qui contient au moins un convertisseur d'ultrasons (23) pour convertir de l'énergie électrique en énergie d'ultrasons et/ou pour convertir de l'énergie d'ultrasons en énergie électrique, une unité (16) d'émission d'ultrasons pour alimenter l'unité de conversion (2) en signaux électriques, une unité (17) de réception d'ultrasons, une unité (18) de conversion analogique-numérique pour la conversion d'un signal électrique analogique en un signal numérique et un système (19) à microprocesseur assurant la commande et l'évaluation, le système à microprocesseur contenant des moyens de mémoire et permettant l'exécution des étapes de procédé suivantes :

- émission d'au moins une onde ultrasonique (8.1),
- détection des ondes d'écho (8.2, 8.5) réfléchies par les surfaces de frontière (5, 10) de l'objet de mesure (3) comme signal de mesure (A(t)),
- détermination de caractéristiques de l'objet de mesure (3) à partir des différences ($\Delta t$) de durée de parcours des ondes d'écho (8.2, 8.5) en numérisant le signal de mesure (A(t)) et en le soumettant dans la plage temporelle par superposition additive pondérée d'impulsions de base (12) décalées dans le temps à une analyse par étalement délimité par des plages de valeurs *a priori* orientées vers la solution de problèmes.

**15.** Appareil de mesure selon la revendication 14, **caractérisé en ce qu'**il contient au moins un convertisseur d'ultrasons (23) piézoélectrique ou magnétostrictif.

**16.** Appareil de mesure selon la revendication 15, **caractérisé en ce qu'**il contient au moins un convertisseur d'ultrasons (23) composite.

**17.** Appareil de mesure selon l'une des revendications 14 à 16, **caractérisé en ce qu'**au moins un convertisseur d'ultrasons (23) présente au moins une surface plane inclinée et/ou au moins une surface (28) courbe pour agir sur les directions de propagation et/ou sur la forme des ondes ultrasoniques (8.1).

**18.** Appareil de mesure selon la revendication 17, **caractérisé en ce qu'**au moins un convertisseur d'ultrasons (23) présente au moins une surface (28) sphérique pour focaliser les ondes ultrasoniques (8.1).

**19.** Appareil de mesure selon l'une des revendications 14 à 18, **caractérisé en ce qu'**au moins un convertisseur d'ultrasons (23) est doté d'au moins une couche d'adaptation (30) qui présente une impédance acoustique appropriée.

**20.** Appareil de mesure selon la revendication 19, **caractérisé en ce qu'**au moins une couche d'adaptation (30) présente au moins une surface plane inclinée et/ou au moins une surface courbe pour agir sur les directions de propagation et/ou sur la forme des ondes ultrasoniques.

**21.** Appareil de mesure selon la revendication 20, **caractérisé en ce qu'**au moins une couche d'adaptation (30) présente au moins une surface sphérique pour focaliser les ondes ultrasoniques.

**22.** Appareil de mesure selon l'une des revendications 14 à 21, **caractérisé en ce que** l'unité (16) d'émission d'ultrasons crée un tir de décharge (pic), une succession unipolaire ou bipolaire d'impulsions rectangulaires (salve) ou une impulsion d'émission contrôlée.

**23.** Appareil de mesure selon l'une des revendications 14 à 22, **caractérisé en ce que** l'unité (17) de réception d'ultrasons contient des étages analogiques de filtrage et d'amplification.

**24.** Appareil de mesure selon l'une des revendications 14 à 23, **caractérisé par** une unité (20) d'affichage et une unité (21) d'introduction de données.

FIG.1

FIG.2

FIG. 3

FIG. 9

FIG. 4

FIG. 5

14

FIG. 6

FIG. 10

FIG. 7

FIG. 8

FIG. 11

EP 0 894 266 B1